# EUROPEAN PATENT SPECIFICATION

(11) **EP 1 127 439 B1**
(45) Date of publication and mention of the grant of the patent: **24.01.2007**
(21) Application number: 99970532.0
(22) Date of filing: 11.10.1999
(51) Int. Cl.: H04L 12/66

(54) **METHOD, SYSTEM AND DEVICE FOR ESTABLISHING COMMUNICATION BETWEEN DIFFERENT COMMUNICATION NETWORKS**
VERFAHREN, SYSTEM UND GERÄT ZUM AUFBAU DER KOMMUNIKATION ZWISCHEN VERSCHIEDENEN KOMMUNIKATIONSNETZEN
PROCEDE, SYSTEME ET DISPOSITIF POUR ETABLIR DES COMMUNICATIONS ENTRE DIFFERENTS RESEAUX DE COMMUNICATION

(30) Priority: 12.10.1998 SE 9803503; 29.06.1999 US 141004 P
(43) Date of publication of application: 29.08.2001
(73) Proprietor: Telia AB (publ), 123 86 Farsta (SE)
(72) Inventor: ARWALD, Jan, S-212 34 Malmö (SE); HAGBARD, Stefan, S-181 61 Lidingö (SE); ANDERSSON, Sten, S-277 36 Lund (SE); ERHULT, Margareta, S-136 41 Haninge (SE)
(74) Representative: Hopfgarten, Nils
(86) International application number: PCT/SE1999/001830
(87) International publication number: WO 2000/022789

(56) References cited:
- EP-A1- 0 758 824
- WO-A2-98/37724
- US-A- 5 239 662

## Description

The present document contains subject matter related to that disclosed in two copending, commonly owned patent applications, the first of which being entitled "Device and Method for Simplified Management of Services in a Communications Network", filed on the same day as the present application having as inventorship Nyckelgard et al, and bearing Swedish patent application number SE-9901819-4, and a second application entitled "Communications Network Service Management Method and Device", being commonly owned and filed on the same day as the present document, having as inventorship Nyckelgard et al, and bearing Swedish patent application number SE 9901820-2.

### BACKGROUND OF THE INVENTION

### Field of the Invention:

The present invention is directed to a central controller, a communication system and a method for enabling communication between different communication networks. More particularly, the present invention is directed to devices, switches, central facilities, and distributed facilities that at least partially, if not completely, establish communication linkage and coordination between different communication networks, including global telephone communication networks, normal telephony communication networks, proprietary data networks, Internet, and electrical distribution networks, for example, according to the preambles of claims 1, 7 and 13 respectively.

### Discussion of the Background

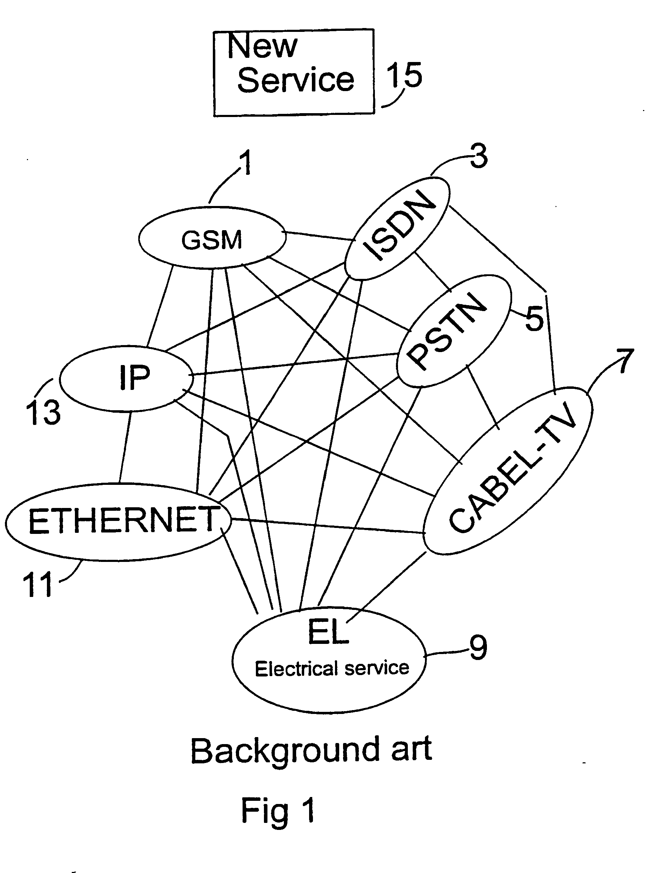

During the information age, communication services and the infrastructure for providing communications has become a commodity. As the information age progresses, significantly more communication services are offered in various forms, each of which having various attributes and servicing different niche audiences. While in most countries the communication infrastructure, at least for telephony, has been established at one time or another by way of a government corporation, or government condoned monopoly, at least at some basic level telephony-based networks are somewhat compatible. However, as more services become available, such as cable television, wireless satellite links, proprietary wireless local loop,Intemet and other terrestrial-based networks. These are an increasing number of protocols and physical components needed to support those services. To the extent it is possible for the different communication networks to provide and share information between the different networks, perhaps by way of a caller request, or data message sent from one network to the next, the burden is on each of the different networks to provide a customized connection to the other networks. This is illustrated in Figure 1, where it is seen that different networks, such as GSM 1, ISDN 3, public switch telephone network (PSTN) 5, cable-TV 7, electrical service 9, Ethernet, 11, and Internet protocol (IP) 13 network each provide individual connections between themselves in a "spaghetti-like" fashion. Consequently, in order to provide connections between the respective networks, the network connections are made directly, thus requiring many translation devices and adapters for each network.

As presently recognized, a limitation with this point-to-point interconnection approach for existing network services, is that every time a connection is required between the different networks, every network must be provided with a new adapter so as to be compatible with the new network. Adding the adapter is a straightforward process from a planning perspective, but implementation is very difficult and cost increases significantly every time a new service is brought on line. Furthermore, such a system provides a barrier-to-entry for smaller proprietary networks that may ultimately bear the burden of funding the expense of updating the adapters for other existing communication systems.

Within the telecommunications world there are operators who have long offered telecommunication services within limited geographical areas. However, there are also new telecommunication operators, and other operators that provide an opportunity to provide telecommunications and other communication services which may be compatible, or even competitors with conventional telecommunication networks. For example, some of the new tele-operators include electrical distributers, cable TV operators, Internet providers, wireless services such as LMDS, etc. Originally, these different "nets" each served different purposes, and were not configured to work with each other since their services were in different topical areas. However, given the significant event of deregulation of the telecommunications markets in the United States and in various other countries, it is presently envisioned that a transformation will occur on a global scale regarding the use of "non-conventional" resources to provide communication services. It is presently recognized that while these different services may be available, in order to have a commercially viable system that offers the consumer (i.e., subscriber, with commercially valuable service that truly allows the subscriber to have worldwide communication freedom regardless of where the subscriber presently is and plans to be in the future) point-to-point translators or gateways are being viewed as the solution. According to the configuration shown in Figure 1, it is up to the different systems themselves to work out the differences in protocols and communication capacities so as to establish communications between the "unconventional" communication providers, if in fact the communications link can be established at all.

In view of the evolution of communication networks in the present deregulation era, the present inventors have recognized that the conventional point-to-point approach towards connecting different networks, will necessarily provide an economic barrier to new services that wish to enter the communications arena, because as each new service comes on line, additional translation and adapter equipment is required for all of the other systems..

As presently recognized, each of the different nets have one feature in common: each net communicates information from one point to the next. When it comes to communicating between different networks, language barriers (protocol differences) present themselves, which must be overcome in order to share the resources available between the different networks. The communication protocols, are not unlike different European languages. For example, more often than not incompatible "native" languages are not an absolute barrier due to the diversity of language skills held by many people. For example, as presently recognized, while it is possible that when one person approaches another person and begins communicating in language A, the second person will instantly be able to understand and converse in that language so that seamless communication may be had. However, often it is the case that when the first person begins communication with the second person in language A, but the second person recognizes that communication is not possible, and tries to respond with language B, hoping that the original speaker will be able to speak language B. Using this ping-pong approach, the two people eventually reach a determination regarding whether or not there is any common language that may be spoken between the two. When a common language is identified, the two may communicate directly, however, if there is no common language between the two, then it will be necessary to use a translator (a third person) in order to allow for the two to speak with each other. The present invention, to some extent, leverages on this concept, and provides a central facility that helps facilitate in a fast and efficient manner different communication protocols that may be common between the two different networks so that those networks may operate in a direct communication mode. However, when communication is not possible the central facility provides an infrastructure for converting between the two languages (a translation function). Furthermore, the central facility helps educate both the first network and the second network, for future communication sessions, by efficiently providing to the different communication networks attributes of specific subscribers and networks that are used in the overall communication system.

WO 98 37724 discloses a system for enabling interworking between multicommunications networks. A subscriber is associated with a plurality of communication networks, each utilizing its own schemes, protocols, and standards for effectuating communication therein. A centralized database is storing subscription, network, service, and location data associated with each of the communication networks. An administrative node defines and provides new subscription, subscriber preference and parameters. The centralized database and the administrative node then communicate with corresponding functions within each of the communications network.

US 5 239 662 describes a communications system including multiple data sources having disparate communications standards which are connected with respective interfaces of a multiple communications controller unit. The interfaces can be customized to operate with various data sources.

### SUMMARY OF THE INVENTION

Consistent with the title of the present section, specific attributes of the present invention are described herein. However, the section entitled "Detailed Description of the Preferred Embodiments" provides a more complete listing of the attributes of the present invention.

A goal of the present invention is to address the above-identified limitations with conventional systems and devices, and establish a central controller system and method that allows for the establishment of communication, in an universal, efficient way, between different networks, using common or different communication protocols.

This goal is obtained by a central controller, a system and a method of the kind defined in the introduction of the description with the charaterizing features of claims 1, 7 and 13.

Each object is made up of a network (i.e., a "net"). Each of the different objects are different in construction and character, and may incorporate a significant amount of proprietary signaling protocol and attributes. Some of the nets; which will be described herein as networks A-G, in a generic sense, although they also include other nodes or networks, are designated for specific use such as telephony, data communication, power transmission and distribution, video and audio programming distribution such as wired cable TV, wireless-cable, wireless local nets, cellular communication networks and the like. These different networks all have different protocols and thus to each of these networks is included an adapter (herein referred to as adapter H), where the adapters are configured to translate between specific protocols used in the networks and a particular general protocol (i.e., a standard protocol). A centrally located controller, as will be discussed, receives information from the different objects whose centrally arranged control equipment sets up communications between the objects (A-G) and/or use of services or between objects.

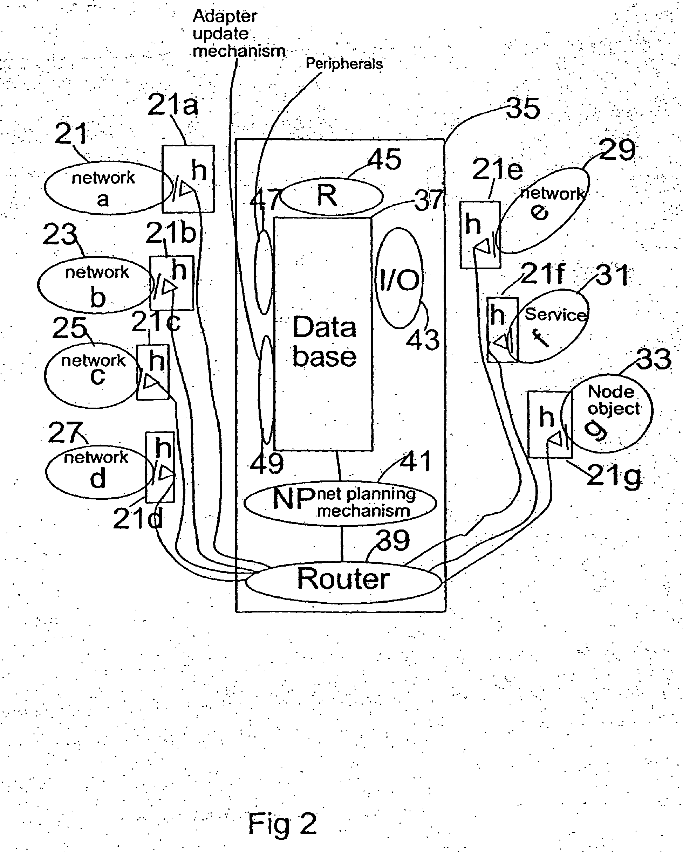

The controller 35 includes a router 39 (see e.g., Figure 2) which is configured to receive information from the different objects to assist in the communication between objects. The controller also includes a database 37 that hosts a list of all the subscribers, their calling numbers in the different objects, and other attributes that may be of interest to the subscribers, for other parties who wish to contact or provide information to those subscribers. The controller 35 uses the database to identify which of the objects a given calling number should be directed. This information is received from the router 39 and transmitted to the database 37, where the database 37 then retrieves the.appropriate information regarding which services are identified for a particular subscriber at that time so the controller 35 will be aware of the subscriber's preferred mode of communication at any particular time. The controller 35 also sends control signals to the different objects (the calling party and the called party) so as to set up the service in question. To this end, the centrally based controller 35 facilitates the process for identifying a common protocol, where appropriate, for communication between the two different objects. This system is facilitated in that the database includes information regarding attributes of the different objects.

When a subscriber moves from one network to the next, the database is updated to keep track of the subscriber's current number such that the new number is held in the database regarding the subscriber's current location so that the subscriber may quickly be identified and a preferred protocol may be identified when establishing communications with that particular subscriber. These particular "net numbers" are made up of internal numbers within a respective object and are not released to the public. Consequently, the subscribers need not change subscriber numbers due to a change of a residence or teleoperator such that calling numbers may be arranged to refer to a net number that is associated with the subscriber number. For this purpose, the database includes a list of the subscriber's affiliation to the different objects. The subscriber number that refers to a given net number in one of the objects or network is guided to another object or network or net number depending on the subscriber's wish at any given time, for example the time of day, day of the week and who is calling, for example.

The present invention also provides a method for providing a communications session between objects that are made up from different communication networks. The principles employed in the different objects or networks are differentiated from one another based on the object's original information. Moreover, in a world that experiences an ever increasing number of different communications providers, the attributes of different communication providers, including even perhaps a small "mom and pop" communication provider will have unique attributes that will not be well-known to others in the communication industry. Nonetheless, even such small companies and newcomers, in fields far from traditional telephone services, will be able to communicate seamlessly in the present system even though according to conventional principles, such systems may be completely different or incompatible with one another. To this end, a feature of the present invention is that the central control equipment, is available to help facilitate the initial communication and even subsequent communications between the different objects, in attempting to ascertain whether or not a common protocol exists between the two networks, when trying to establish a call or service request. To this end, the controller identifies the objects and categorizes them according to the different working principles employed in the objects and provides a verification that a translation at some part between the two different networks may be carried out in order for a communication session to be established. When the result of these processes is that the communication between the objects is guaranteed as services are accessible within one of the objects resulting in use of connections in another object. To assist in meeting this goal, initially, objects and the controller communicate with one another according to a predetermined protocol.

The phrase "joint protocol", describes a concept of two different communication entities communicating together on a commonly available protocol, which may be object-dependent in some cases. The controller confirms in the case of the object dependency, which protocol the individual objects are capable of using, and then when these objects are able to use a common protocol, assigns that protocol to the different networks so as to allow the networks to communicate directly with each other. However, when a joint protocol is not available, the centrally based controller, has available a router, that is able to translate between available protocols. The central controller also provides a learning capability that updates the adaptors H used in the different objects to assist in implementing the joint protocol in future sessions. Thus when the overall universal communication system is updated and a new communication object comes on line, the adaptation equipment H is updated with the appropriate protocol such that future communication may be facilitated, where possible. When it is not possible to update a particular adapter H for a particular object, perhaps due to significant processing demands, the centrally based controller will assume the function of facilitating the communication between the two different objects.

After an activity is established when connecting different objects, the different objects will then confirm whether or not a particular activity may be accomplished by the adapter H itself or if external assistance is required. When external assistance is required, the central controller is employed to help facilitate the communication by the central controller contacting the objects or networks which attempt to communicate with one another. When necessary, the central controller will actually restructure information from one object to the other such that the objects are able to understand each other and the information is thus allowed to be managed within a respective object. The objects themselves also establish a profile for the different connections between the different objects that define the services to which the subscriber will have access. This profile is stored at the adapters for the different objects, or optionally, leverages off the storage space available within the database at the central unit and stores the information there for a quick retrieval. The objects themselves or the central controller confirms which of the objects will be used in different requested services and which connection paths will be available for the different cases. When determining which links are available, available system capacity for different objects is available and optionally used when considering which connections to establish. To this end, objects, may optionally provide channel loading information to the central controller on a periodic basis so the central controller will have available information regarding the most efficient routing route for establishing connections for different services.

The inventive method, system and central controller offer numerous advantages, one of which being that the present solution offers an alternative to establishing individual connections between systems when the systems themselves attempt to communicate information therebetween. In this way, the services offered by the different systems may be used jointly, such that traditional users of one object or network may employ available services from another network so as to increase the flexibility and available routing paths for distributing information to different subscribers. A feature offered by the present invention, is that subscribers themselves will have increased flexibility by being able to transport numbers associated with that subscriber from system to system even though that subscriber may move to a different area code, country, or even terminate subscription to one service and employ an offering made available by another service. Another advantage is that the attributes associated with having a central controller with an accessible database, enables subscribers to preregister and adaptively change particular profiles regarding how and when that particular subscriber would like to receive information distributed from anyone of a variety of different calling services. For example, the subscriber may permit certain types of traffic to be connected to that subscriber's residence at certain times of the day, but route that same type of traffic to the subscriber's work location at other times of the day. Furthermore, a subscriber is thus able to monitor different types of calls in order to allow only certain calling services to get through during certain times and/or certain circumstances. For example, during dinner hours at the subscriber's residence, the subscriber may choose to route all information to a particular service that provides a message recording service rather than any service that presents an audible alarm that might annoy the user during dinner.

The present invention also greatly facilitates the incorporation of new communication services into a seamless information communication system that includes many of the traditional services, as well as new start-up networks.

At least one limitation associated with the system shown in Figure 1, is that it is difficult for new services 15 to be incorporated, in a cost effective manner, so as to become intercompatible with different communication resources such as those shown in Figure 1.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
Figure 1 is a diagram showing a conventional, evolutionary approach towards establishing communication links between existing networks;
Figure 2 is a block diagram of a universal, central controller-based communication network that interconnects a variety of existing networks and communication resources according to the present invention; -
Figure 3 is a block diagram of a processor portion of a central controller according to the present invention;
Figure 4 is a block diagram of an adapter used in an existing object according to the present invention;
Figure 5 is a data structure of a word employed in a joint-protocol between an existing network and a central controller according to the present invention; and
Figure 6 is a flowchart of a method employed according to the present invention.

### DESCRIPTION OF THE PREFERRED EMBODIMENTS

Referring now to Figure 2, a system architecture according to the present invention is now described. Objects are referred to herein as being networks and may be the entire network itself, or portions of particular networks or services. These objects are represented as items A-G, objects 21, 23, 25, 27, 29, 31 and 33. Objects 21, 23, 25, 27 and 29 are shown as being different networks, that may include among other things normal telephone systems, such as the public switch telephone network (PSTN), cellular systems, GSM-based communication systems, network management terminal-based systems, personal communication services (PCS) systems and the like. Other objects may be any type of system that provides communication resources by which different subscribers may be accessed, or equipment or services employed by the subscriber may be accessible. Such services are represented as service F 31 in Figure 2 and includes local area networks, cable TV systems, wireless local-loop systems, electrical distribution networks with communication resources, wireless networks and the like. In addition, particular objects of a node represented as item G 33 in Figure 2, may be particular individual resources for the different networks 21, 23, 25, 27, 29 or services 31. More particularly, the node G 33 may be a particular terminal or even be a subscriber terminal or a piece of equipment employed with an existing network, in contrast to the different networks 21, 23, 25, 27, 29 and 31, where generally the adapters 21a-21g, are arranged at switching facilities within the network, central controllers within the networks, or at locations other than specific subscriber-level nodes in the network. Moreover, the different adapters included in Figure 2, are not to be construed so restrictively as being limited necessarily to being located only at the core routing hub, or switching facilities in the different networks, but also may be located at particular nodes, such as subscriber-nodes, on the network itself. According to such an architecture, particularly flexible systems are developed.

Generally, the different objects 21, 23, 25, 27, 29, 31 and 33, employ incompatible protocols when it comes to communicating between the different objects. One aspect of the incompatibility, is the addressing principles that are employed in the different networks as well as the protocols employed thereby.

The system shown in Figure 2, employs the central controller 35 that contains therein a protocol coordination mechanism 45, database 37, network planning mechanism 41 and router 39. Peripheral equipment 47 and an adapter update mechanism 49, are components of the central controller 35 that help facilitate managing connections between the different objects 21-33. While a single database is shown, and a single central controller 35 is shown, certainly the database 37 and controller 35, may include parallel processing architectures with parallel resources available so as to facilitate the communications between objects 21-33. Furthermore, the router 39, may be a set of routers located in a single location, or even a distributed architecture with routers that are interconnected amongst each other in a more diversified application. When the central controller 35 includes multiple components located in geographically distributed areas, the different components of the central controller 35 are connected to one another by way of an internal communication network for efficiently exchanging information between the different components of the central controller 35. Nonetheless, for simplicity sake in describing the structure shown in Figure 2, a single central controller 35 is shown with the single database 37 and single router 39.

The central controller 35 operates in the following manner. The database 37 is populated with an aggregate list of subscribers who subscribe to services offered by the objects 21-33. Associated with the subscriber information, is at least a subscriber general calling number, that is uniquely associated with each subscriber. The database 37, is a software-based database hosted on a computer readable medium, such as Oracle 8, although other databases such as SQL may be employed as well. When an inter-object communication session is to be established, a calling network, such as object 21, passes a signal through adapter 21 a to the central controller 35, indicating that an inter-object communication session is to be established. In the message to the central controller 35, is a message that includes the general calling number for that particular subscriber. A profile for the subscriber is identified in the database 37, and the calling number associated with that particular subscriber, according to the protocol is thus provided back to the adapter 21a for establishing a link with the object associated with that subscriber at the particular point in time. The database 37 will include an indication as to whether or not a common "language" protocol exists between the calling object 21, and the called object, say service F31. When the common language is available, the adapter 21a communicates directly through the router 39 to the adapter 21according to that common language. The central controller 35 may optionally include an interrogation session between the adapter 21a and adapter 21f to identify particular loading demands on the resources of the different objects so as to determine an efficient communication routing path between the two different objects 21 and 31. On the other hand, when the common protocol is not present between the object 21 and the object 31, the router 39 provides a "translation" function so as to facilitate communications between the two different objects. In this case, the router 39 may employ both internal and external mass memory to provide a buffer with a predetermined capacity so as to hold predetermined amount of the information to be routed to the called subscriber when the communication session is established.

Regarding the different connections between the adapters 21 a-21 f, any one of a variety of connections may be included, such as a terrestrial-based wired-connection, as well as terrestrial-based radiowave communications using various types of transmission techniques including analog and digital communication, as well as other type of communication systems such as satellite-based wireless communications, optical communications and the like, any of which are capable of transporting information from one point to another. The router 39 need not bear the entire burden of translation, because the central controller 35 is familiar with the communication attributes of the adapters 21 a and 21 f, such that the bulk of the translation work may be performed between the adapters 21a and 21f, by having these adapters perform a predetermined portion of the translation function, reserving the remaining translation to be performed by the router 39.

In many situations, after a predetermined period of time, the adapter update mechanism 49, observes the function performed by the router 39, when facilitating communications between the adapter 21a and 21f. The adapter update mechanism 49 then initiates a communication update session with each of the adapters 21 a and 21 f, such that the adapters 21 a and 21f, are software-upgraded to perform the function performed by the router 39. According, in future communication sessions between the object 21 and the object 31, the adapters 21a and 21f are equipped to perform the entire protocol conversion process without further assistance of the router 39. When this update process has been performed, a record is kept in the database 37, so as to indicate that the adapters 21 a and 21 f have been updated.

For a more typical inter-object communication session, the object a21 transmits to the subscriber information in a session initiation message. The object 21a passes this information to the adapter 21a in a conventional format employed in the network protocol for resources within object a21. The adapter 21a then converts this message into a generally, agreed-upon form of transmission to the router 39, where the agreed-upon protocol was previously determined in a earlier transaction between object a21 and the central controller 35. The communication then from the adapter 21a to the router 39, includes, according to this protocol, the addressing information regarding that particular subscriber, including the subscriber number for that service.

The router 39 then receives the information from object a21 and forwards the information by way of a planning mechanism 41, so the planning mechanism may monitor the transactions and accesses of the database 37. The central controller 35 then employs the subscriber number in the message sent to the router 39, so that the records for that particular subscriber may be identified within the database 37. Included in this message may include specific services (such as communication capacities, protocols listed in prioritized order, type of communication voice, data, video or the like) so that the central controller 35 may consider this when determining a suitable protocol when arranging for an optimum linkage between the calling object a21 and the called object e29. The database listing will include the functionalities associated with that particular subscriber, including the profile for that particular subscriber, regarding the different objects at which that subscriber will be located for a particular time of the day. For example, the subscriber may for example, require that all communication take place via the subscriber's home number, during certain periods of the day, at work during other times of the day, and to a telecommunication facility at other times of the day or for only a selected list of objects, that employ certain types of receivers (say a car radio for example which receives one-way communication from a satellite service), for example. On the other hand, the central controller 35 may employ an iterative communication linkage verification operation, where according to a priority order set by the subscriber, the central controller 35 will attempt to ascertain whether or not the subscriber is personally available to receive information at that particular time. If the subscriber is not available, perhaps by way of an automated message after a predetermined period of time has elapsed by the subscriber not picking up the communication service, the message may be routed to the next object identified on the subscriber's profile stored on the database.

Once the protocol coordination mechanism 45 in the central controller 35 determines how a particular communication link should be established between the object a21 and the object e29, the protocol coordination mechanism 45 routes a message through the net planning mechanism 41 and router 39 to the object that is being called, in this case object e29, informing the adapter 21e of the protocol that is to be employed in the communication with the adapter 21a associated with the object a21. The object e29 receives the information provided from the protocol coordination mechanism 45 after first having been translated into the native protocol for the object e29 by the adapter 21 e. It is at this time that the object e29 provides an update message to the router 39, indicating whether or not the communication link can surely be established. When it is, the router serves as a switch so as to close the link between the adapter 21a and the adapter 21e.

While the structure shown in Figure 2 provides a mechanism by which communications may be established between terminals in different objects, it is possible that internal communications even within a particular object may be routed through the central controller 35. This may be the case when internal breakdowns occur within a particular object, such that message traffic may be routed through the central controller 35, as an alternative path for establishing communications on an intra-object basis.

The protocol coordination mechanism 45 keeps track of the different protocols employed by the different objects 21-33 and includes a mechanism for comparing the communication attributes between the different protocols. Thus, the protocol coordination mechanism 45, upon receiving a particular request for establishing a communication link between one object and another, may rapidly analyze the candidate protocols (i.e., the languages that are common to the different objects) and determine the most effective protocol to which to direct the different adapters used by the objects for making the communication link. In conditions where an exact overlapping language is not available, the protocol coordination mechanism 45 will identify the protocols that are within the vocabulary of the different objects under consideration, so that the resulting protocols employed during the communication session, places the minimum translation burden on the router 39. Conditions considered by the protocol coordination mechanism 45 include among other things, whether special requirements are needed when translating between the different protocols (such as one way or two way communication) which types of communications are allowed in the respective objects (asynchronous, synchronous communications at predetermined gradations of data rate) and how traffic is to be routed through an object that is not directly affected by a communication session. For example, it is possible that the object is merely a distribution system where the communication link back to that communication system is through a central controller, that only has predetermined times which it can receive information. Accordingly, in that situation the protocol coordination mechanism 45 would identify that a store-and-forward communication link needs to be established, where the burden is placed either on the router 39 or the respective adapter for that particular object or a combination of the two.

The net planning mechanism 41 is in one embodiment connected between the router 39 and the database 37. However, connections between the router 39 and the database 37 may be made directly, or through input/output device 43, which may serve as a common bus between all the components contained within the central controller 35. Generally, this net planning mechanism 41 oversees communications between the different objects, and internally between the protocol coordination mechanism, database 37, peripherals 47 which provide updates to the database 37 when required during a maintenance action or updating of the database files from a local location, as well as the adapter update mechanism 49. The net planning mechanism 41, facilitates the coordination between the adapter of the calling service and the adapter of the called service, when determining whether or not services are available between the adapters for establishing a communication link, and consulting with the protocol coordination mechanism 45 when identifying the optimum protocol for the available services for both the calling object and the called object. The net planning mechanism 41, may also direct a change in the agreed-upon protocol during a communication session, when loading changes occur in the different objects.

Accordingly, when error events occur or significant loading events occur on particular objects or communication resources used by the objects, the net planning mechanism 41 is able to redistribute the information flow from one object to the next, based on the most efficient use of system resources. In some events this will require the rerouting of information, the establishment of a new protocol to be used between the objects, or even the inclusion of a third or more object, as part of the rerouting of the information. The net planning mechanism 41 may also be distributed amongst different geographic locations, as is the case with the database 37 and the central controller 35, with links established between the different components of the net planning mechanism 41. In this case, as long as the net planning mechanism 41 and protocol coordination mechanism 45 have access to the different components of the database 37, the system is configured to be "self-healing" if various component parts of the network planning mechanism 41, database 37 and protocol coordination mechanism 45 fail during the normal course of events. In such situations, the database 37, replicates itself through dedicated communication lines, or alternatively other communication links, so that redundant copies of the information stored in one of the components of the database 37, may be found in another database at a geographically distinct location. Thus, the overall system reliability and maintainability is facilitated by the avoidance of mission-critical failures occurring within any one particular hardware-resource. In events where protocols are changed, or an error occurs in one of the other objects, the database 37 may receive a portion of the information itself, and save the same as part of a store-and-forward communication link so as to avoid disruptions in the communication and the potential loss of information.

Turning now to an example implementation of the present method, and in particular, when a new communication provider is connected to the system shown in Figure 2, suppose a new customer, i.e., a subscriber, signs an agreement with an operator acting as a communication provider, for example a telecommunication provider regarding services to be accessible for that particular subscription. The subscription is given a calling number that is used by others to call that particular subscriber according to that subscription within the network for which the subscriber has obtained a subscription. The operator registers this selected service and records those services that can be implemented from the operator's network and which the services are implementable through cooperation with other operators. With this information, a profile for that particular subscriber is set up and stored in the system which the subscriber receives as a home address. In this manner, a customer uses the resources for that particular telecommunication network, but also has access to services that are offered subscribers in other services. For example, the different objects 21 through 33 in Figure 2, may provide different types of telecommunication networks in this regard that are operated by different types of operators, which may include telecommunication networks, data networks, mobile telephone networks and the like. By agreement between the different operators, regulations are optionally determined for transmitting traffic therebetween, for example, by use of joint protocols, sharing of economic benefits, choice of routing, and in special cases, allocation of particular channels, frequencies and the like. The subscribers may be assigned additional numbers associated with that particular subscriber that unequivocally identify the subscriber's different connections. In this context, all the different connections refer back to the particular subscriber who has been assigned that particular number such that communications from mobile telephones, fixed telephones, facsimile transmissions, data subscriptions and the like can be routed to that particular subscriber. The different numbers, logic numbers, associated with that particular subscriber, are associated in the database 37, with a "net number" that is provided to the object when the subscription is activated. Additionally, the subscriber is allowed to use different services depending on which of the subscriptions is used and which of the nets are involved. However, subscribers may wish to make increased use of services that do not belong to that particular service provider, but rather are resources of other providers (for example such as a paging function or the like).

The central controller 35 employs the database 37, as a mechanism for hosting the relationship between that particular subscriber and the various logic numbers assigned to that subscriber. Each of the logic numbers are associated with one or several net numbers for communicating with one or several of the different objects.

When a call is initiated to the subscriber, the central controller 35 identifies the type of communication that is being requested, and what the potential alternatives exist for establishing that connection to the other object. When determining the type of connection to be established, the profile associated with the particular subscriber, is accessed from the database and determined in priority order which of the different potential objects and locations associated with that subscriber should be first attempted, according to time of day, day of the week, and particular recognition of a subscriber's location at any given moment. When a call is established, the calling object indicates the subscriber's logic number. This logic number is then transmitted to the central controller 35 with a request for connection and instructions as to the preferred communication path. The central controller 35 then interprets the logic number and associates that logic number with the subscriber's records in the database 37. The records in the database 37 will indicate the operator and the object which the connection is to be made. In the central controller 35 additional conditions are monitored for establishing communications and the routes by which the connection will be executed, which net/operators (objects) will enter into the connection. The different objects then receive information from the central controller 35, regarding how the adapters associated with each of the objects, should convert the native protocol for that particular object into a mutually agreeable protocol so as to establish a direct connection through the router 39 to the other object, or so as to invoke a protocol that is as close as possible, as determined by the protocol coordination mechanism 45, so that the burden placed on the router 39 for translating between the protocol employed by the adapter for the calling object, is as close as feasible to the protocol employed by the called object. If it is determined that a direct connection between the two different objects is possible, optionally, a mutually agreeable communication path, that excludes the router may be invoked. The protocol coordination mechanism 45, monitors the respective subscriber profile stored in the database 37, for the purpose of establishing which services are available and usable for that particular called subscriber during the communication and also for determining whether or not any of the services to which the parties have access may create conflicts. Based on the results of the monitoring operation, the net planning mechanism 45, in the central controller 35, will be avoided, until a mutually agreeable communication link can be established. The choice of connection through which the communications will be carried out also occurs with reference to the profile for the particular subscriber stored in the database 37. This connection may, for example, depend on the time of day, who is calling, the type of communication requested, etc.

In normal operation, when incompatible objects are the subject of a communication session, the central controller 35 is interjected in the link so as to provide a direct connection to the called object by way of the router 39 and the respective adapters associated with the calling object and the called object. In this situation, the calling object sends a query to the central controller 35 via a predetermined protocol, after which the central controller 35 consults with the database 37 and determines which services are needed. The central controller 35 then determines which objects are to be activated, and consults with the object to be activated so as to assure a link can be established at that particular time, and once confirming the same, establishes the connection. When the connection is established, the central controller 35 informs the adapters associated with the calling object and the called object to communicate using a certain predetermined protocol, and only if necessary, is the router 39 interjected for performing an active translation role between the protocol employed by the calling object and the protocol employed by the called object.

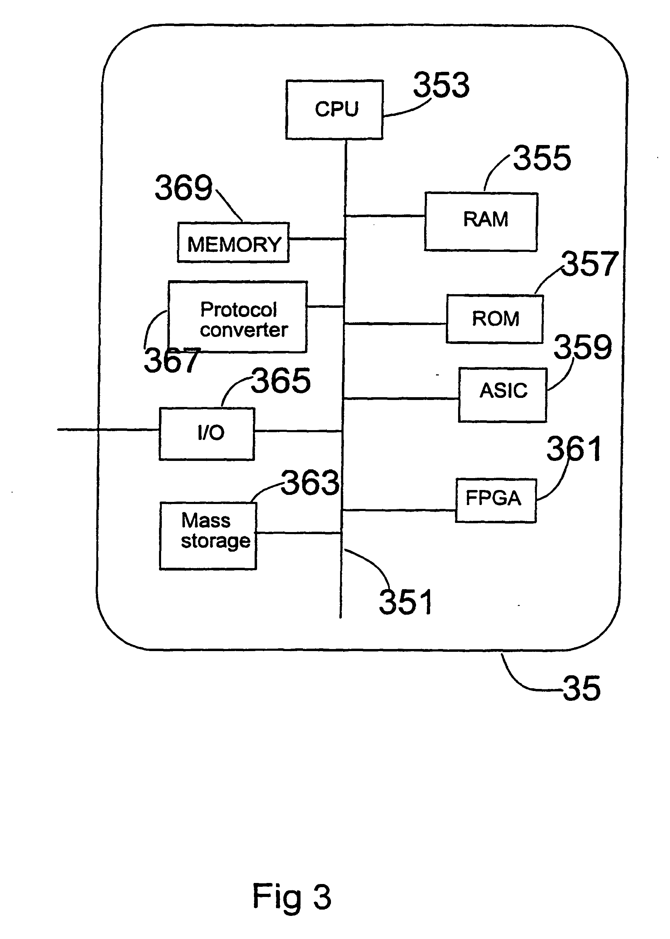

Figure 3 is a block diagram of the central controller 35. A system bus 351 interconnects a central processing unit (CPU) 353 which provides the processing infrastructure for the software implemented central controller. The CPU 353 communicates over the system bus 351 with ROM 357 and RAM 355 which provide permanent and read/writeable memory capacity respectively. The ROM 357 is field-writeable such that changes in the application software for implementing the protocol coordination mechanism 45 (Figure 2) net pla,nning mechanism 41 (Figure 2) and router functions 39 (Figure 2), are implemented. While the respective mechanisms shown in Figure 2 within the central controller 35 are predominantly operated in software on the CPU 353, processing resources may also be implemented using hardware implementations in the form of an application specific integrated circuit (ASIC) 359 and field programmable gate array (FPGA)361 which also connect to the system bus 351. The database 37 (Figure 2) is hosted on mass storage medium 363 which may be magnetic memory, optical memory or the like. While a single CPU 355 is shown to be the single processor that coordinates reading and writing operation on the mass storage 363, other processors may also populate the system bus 351, and as an alternative embodiment a separate processor is dedicated for the information retrieval and searching operations for the database implemented on the mass storage medium 353. An input/output controller 365 connects to the system bus 351, as well as a protocol converter mechanism 367 and memory 369. The protocol converter 367 and memory 369 implement a portion of the router 39 (Figure 2) for assisting and facilitating the translation operation when communication between two objects uses an incompatible protocol such that a translation operation is performed in the router 39 (Figure 2), which is implemented largely in the protocol converter 367 with associated memory 369 and I/O controller 365. The protocol converter 367 may itself include a separate processor or processors to implement the router functions. The I/O controller 365 governs information and message traffic between the central controller 35 and external objects, in addition to the communications with local peripherals 47 (Figure 2).

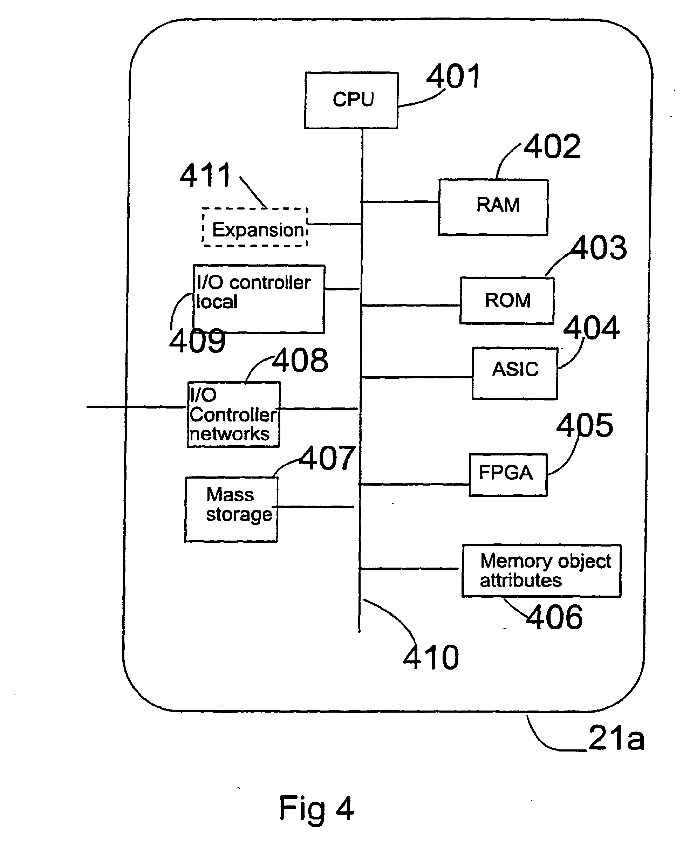

Figure 4 is a block diagram of components employed in one-embodiment of the adapter 21a (Figure 2). Much of the structure included for the adapter 21a is similar to that shown for the central controller 35 of Figure 3, albeit components being of a lesser scale regarding throughput demands when implemented on a system-wide level. A system bus 410 interconnects a CPU 401, RAM 402, ROM 403, ASIC 404 and FPGA 405 as shown. The CPU 401 implements the protocol conversion operation, based on application software saved on the ROM 403. RAM 402 serves as buffer memory as well as temporary storage for retaining control parameters directed by the central controller 35 (Figure 2) when establishing an optimum protocol for communication during a communication session. ASIC 404 and FPGA 405 assist the CPU 401 in performing special purpose operations. Mass storage device 407 serves as a message buffer, when the communication data rate for the object 21 (Figure 2) to another object operates at a different data rate. In this case, the mass storage 407 serves as a buffer, so as to provide a mechanism by which communications may occur with relatively seamless restraint on the usability of the system from a subscriber's perspective. I/O controller 48 serves as a connection to the central controller 35, as well as other objects when direct connections are approved by the central controller 35. The I/O controller 409 serves as a local interface with the object 21. The adapter 21 a includes expansion room 411, for accommodating additional processor resources so as to allow for sufficient processor resources when additional communication services come on line and the amount of translation services are shifted from the central router in the central controller 35 to the adapter 21a.

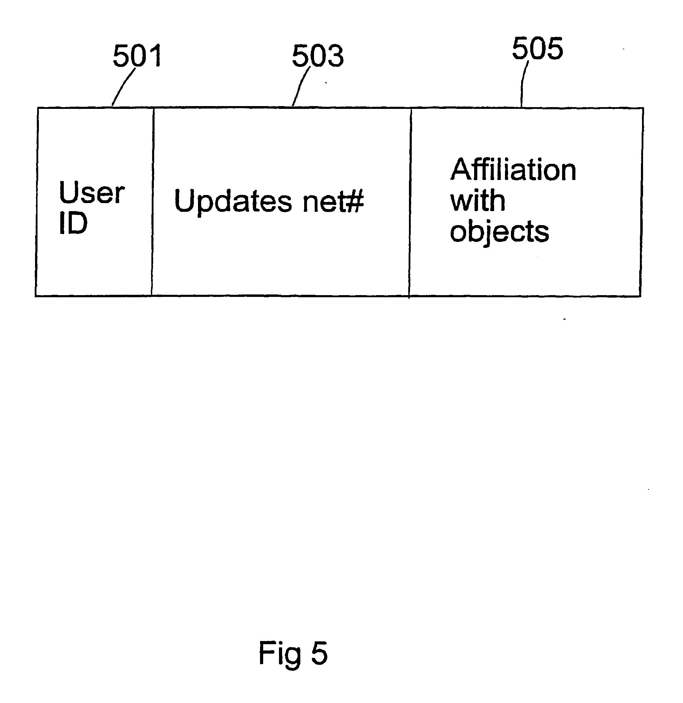

Figure 5 shows a data structure for a user profile stored in the database 37 (Figure 2). The exemplary data structure includes three data fields (which may be stored in separate entries in the database, but are nonetheless associated with one another). Data field 501 includes information regarding the particular user's identification. Included with the user ID is billing information, personal information regarding user name and the like. In addition, the user ID will include the subscriber-specific information such as the subscriber number which is uniquely associated with that particular subscriber. Field 503 includes an updated net number, which is a specific number at which the subscriber may be located at a particular time, either as identified by the user profile also saved in the database (in field 505 as will be discussed), or by way of subscriber-specific registration, when the subscriber knows that the subscriber will be deviating from the normal pre-programmed schedule previously stored in the database. The updated net number is quickly identified in the database as being the location at which the central controller 35 will attempt to reach that particular subscriber when establishing a communication session. Data field 505 includes particular affiliations associated with a given object for that particular subscriber. In other words, the data field 505 (which may be more than one word in the database entry) includes schedule for a particular subscriber including associations with the different net numbers for the subscriber according to those particular time frames, as well as protocol attributes associated with the different objects which the subscriber is associated with.

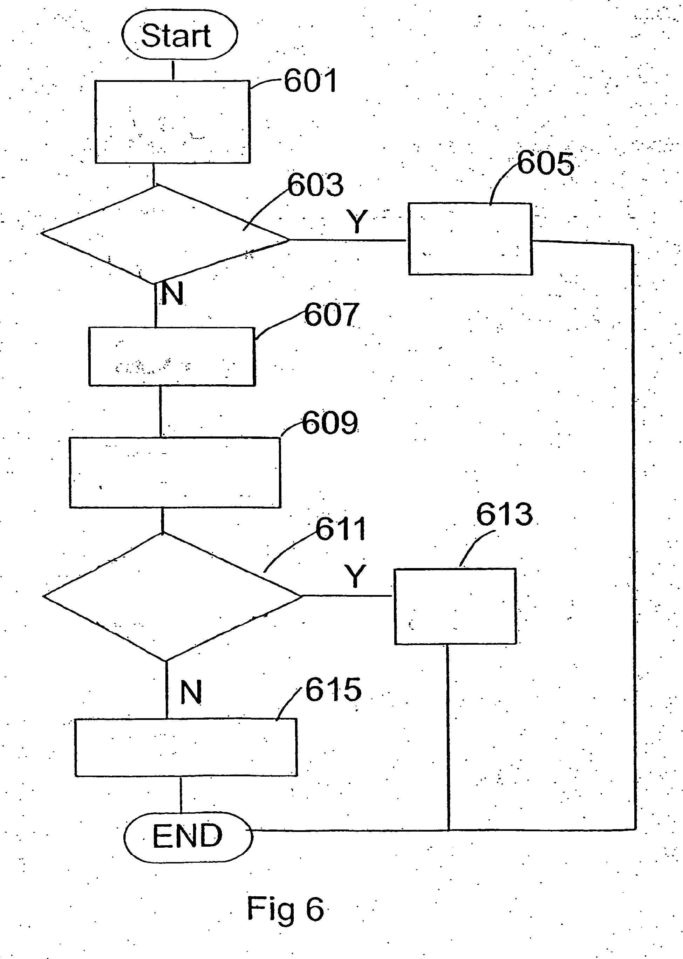

Figure 6 is a flowchart of a method for establishing communications between two objects by way of a central controller. Reference is also made to an Annex to the description listing the reference numerals in figure 6 and the features denoted by them. The process begins in step 601, where a subscriber in a first object, requests a call to a particular called party. The process then proceeds to step 603, where an inquiry is made regarding whether the called party is accessible in the present network (object). If the response to the inquiry in step 603 is affirmative, the process proceeds to step 605, where the intra-object connection is made and subsequently the process ends. However, if the response to the inquiry in step 603 is negative, the process proceeds to step 607, where the adapter associated with the calling party's object, consults with the central facility 607 by way of a call using a predetermined protocol previously established between that particular object and the central facility. The process then proceeds to step 609, where the central facility extracts from the message the net number associated with the subscriber who is being called. In this step, the central facility refers to the called party's profile and identifies the candidate locations at which the called party may be located. The central facility then checks with the object identified by the subscriber's profile as being the most likely location where the subscriber will be identified, and determines whether or not a communication session can be established with the called party at that object. The process then proceeds to step 611 where an inquiry is made regarding whether the caller's object has an adapter that is suitable to communicate with the adapter used by the object at which the called party may be contacted. If the response to the inquiry in step 611 is affirmative, the process proceeds to step 613, where the central facility authorizes a direct connection between the adapter for the calling object to the adapter for the called object. The direct connection may be either through the router at the central facility or optionally separate from the router. Subsequently the process ends. However, if the response to the inquiry in step 611 is negative, the process proceeds to step 615 where adapter for the calling object is directed to communicate using a first predetermined protocol, and the adapter for the called object is directed to use a second protocol (where the first and second protocols are deemed by the central facility to demand the minimal amount of translation resources from the central facility) so that the communication link may be established through the router, which provides for the translation from the first protocol to the second protocol. Once the communication session is completed the process then ends.

The mechanism and processes set forth in the present description may be implemented using a conventional general purpose microprocessor(s) programmed according to the teachings in the present specification, as will be appreciated to those skilled in the relevant arts. Appropriate software coding can readily be prepared by skilled programmers based on the teachings in the present disclosure, as will also be apparent to those skilled in the relevant arts.

Obviously, numerous modifications and variations of the present invention are possible in light of the above teachings. It is therefore to be understood that within the scope of the appended claims, the invention may be practiced otherwise than as specifically described herein.

### ANNEX

### LIST OF REFERENCE NUMERALS IN FIGURE 6 AND THE FEATURES DENOTED BY THEM

| Reference numeral | Feature |
|---|---|
| 601 | Receive subscriber request |
| 603 | Called party accessible in present network? |
| 605 | Make connection |
| 607 | Consult with central facility |
| 609 | Check subscriber affiliation and check with called object |
| 611 | Callers object adapter suitable to communicate with called party's adapter |
| 613 | Autorize connection direct |
| 615 | Send signal through raster for translation |

## Claims

1. A central controller for establishing a communication session between a first network and a second network, each being arranged to use one or more specific protocols that may be different in each network, wherein said central controller (35) includes a protocol coordination mechanism (45) comparing attributes of different protocols supported by a first adapter of said first network and a second adapter of said second network when establishing the communication session between the first network and the second network, and a database (37) having a list of subscribers with associated calling numbers in said database, said database being configured to hosting information associated with the calling numbers for different network to which the subscribers belong, **characterized in that** the central controller is arranged to use a particular general protocol in establishing a communication session with the adapters, said adapters (21a-g) being arranged to translate between the specific protocols used in each network and said particular general protocol for establishing a communication session with the central controller (35), **in that** the central controller is arranged, in response to a service request from one of the networks for establishing the communication session with the other network, to identify whether a common protocol exists between the two networks (21, 23, 25, 27, 29,31, 33), based on the information in said database (37), and **in that** the central controller is arranged, when a commonly available protocol exists, to communicate with said networks (21, 23, 25, 27, 29, 31, 33) according to said general protocol and to assign that commonly available protocol to the different networks to allow direct communication between them, otherwise, the central controller (35) being arranged to provides translation between the available protocols used by each network (21, 23, 25, 27, 29,31, 33) to allow the communication between the networks to take place through the controller, said first network being one of a mobile telephone network, a wire-based telecommunication network, a cable television network, an Ethernet, and an electrical distribution network.

2. The controller according to Claim 1, **characterized in that** said central controller (35) includes a router (39) that is configured to receive information from said first adapter and to coordinate said communication session between said first network and said second network.

3. The controller according to Claim 1, **characterized in that** said central controller (35) is configured to access information in said database (37) regarding services to be invoked when establishing said communication session between said first network and said second network and to send from said router (39) control signals to at least one of the first adapter and the second adapter so as to establish a protocol to be employed by the first adapter and the second adapter, when communicating during said communication session.

4. The controller according to Claim 1, **characterized in that** said central controller is arranged to change entries in said list of subscribers in said database (37) when notified of a subscriber moving from one network affiliation to another, and **in that** said network controller (35) is arranged to employ new information associated with a movement of the subscriber to establish said communication session at a present network associated with said subscriber such that a change in calling numbers by said first network is not required in order to establish the communication session with the subscriber.

5. The controller according to Claim 1, **characterized in that** said database (37) has database entries for associating various calling numbers for a particular subscriber with a network and a net number for said subscriber.

6. The controller according to Claim 5, **characterized in that** said database (37) is configured to associate one calling number included in a call request for a specific subscriber with a net number and another calling number at which said subscriber is available.

7. A communication system, comprising:
a first network and a second network, each being arranged to use one or more specific protocols that may be different in each network, a central controller (35) being configured to establish a communication link between said first network and said second network, and said central controller including a database (37) having a list of subscribers with associated calling numbers in said database, said database being configured to host information associated with the calling numbers for different network to which the subscribers belong, **characterized in that** a first adapter is configured to translate between a native protocol used in said first network and a particular general protocol, said central controller (35) being configured to communicate with said first adapter using said general protocol, and **in that** a second adapter is configured to establish a coordination session between said central controller (35) and said second network, **in that** the central controller is arranged, in response to a service request from one of the networks for establishing the communication session with the other network, to identify whether a common protocol exists between the two networks (21, 23, 25, 27, 29,31, 33), based on the information in said database (37), and **in that** the central controller is arranged, when a commonly available protocols exists, to communicate with said networks (21, 23, 25, 27, 29, 31, 33) according to said general protocol and to assign that commonly available protocol to the different networks to allow direct communication between them, otherwise, the central controller (35) being arranged to provides translation between the available protocols used by each network (21, 23, 25, 27, 29,31, 33) to allow the communication between the networks to take place through the central controller, said first network being one of a mobile telephone network, a wire-based telecommunication network, a cable television network, an Ethernet, and an electrical distribution network.

8. The system according to Claim 7, **characterized in that** said central controller (35) includes a router (39) that is configured to receive information from said first adapter and to coordinate said communication between said first network and said second network.

9. The system according to Claim 7, **characterized in that**
said central controller (35) comprises a router (39) that is configured to provide an interface between the first adapter and the second adapter, and
a database configured to hold a list of subscribers and calling numbers of the subscribers,
said central controller (35) being configured to access information in said database regarding services to be invoked when establishing said communication between said first network and said second network, and to send from said router control signals to at least one of the first adapter and the second adapter so as to establish a protocol to be employed by the first adapter and the second adapter when communicating.

10. The system according to Claim 7, **characterized in that** said central controller (35) is arranged to change entries in said list of subscribers in said database in response to notification of a subscriber moving from one network affiliation to another; and **in that** said central controller (35) is arranged to employ new information associated with a movement of the subscriber forte establishing said communication at a present network associated with said subscriber such that a change in calling numbers by said first network is not required in order to establish the communication with the subscriber.

11. The system according to Claim 7, **characterized in that** said central controller (35) includes a database (37) having database entries that associate various calling numbers for a particular subscriber with a network and a net number for said subscriber.

12. The system according to Claim 7, **characterized in that** said database is configured to associate one calling number included in a call request for a specific subscriber with a net number and another calling number at which said subscriber is available.

13. A method for communicating between networks, each being arranged to use one or more specific protocols that may be different in each network comprising the steps of:
sending protocol coordination information to a central controller (35) from a first adapter associated with a first network requesting the establishment of a communication session to a second network;
receiving said coordination information at said central controller (35).
identifying at said central controller (35) communication attributes of said first adapter and said first network and attributes associated with a second network having associated therewith a second adapter, and hosting in a database information associated with calling numbes for different networks, the database having a list of subscribers with associated calling numbers, **characterized by** the steps: translating information at the first adapter and the second adapter between the specific protocols used in each network and a particular general protocol used in establishing a communication session with the central controller (35), identifying at the central controller, in response to a service request from one of the networks for establishing a communication session with another network, whether a common protocol exists between the two networks (21, 23, 25, 27, 29,31, 33) based on the information in said database (37), the central controller communicating, when a commonly available protocols exists, with the adapters in said networks (21, 23, 25, 27, 29, 31, 33) according to said general protocol and assigning that commonly available protocol to the different networks to allow direct communication between them, otherwise, providing at the central controller translation between the available protocols used by each network (21, 23, 25, 27, 29,31, 33) to allow the communication between the networks to take place through the central controller.

14. The method according to Claim 13, **characterized by** establishing at said central controller (35) whether said first adapter and said second adapter perform said step of translating information exclusively, and determining whether an intermediate translating step is required.

15. The method according to Claim 13, **characterized by** directing said first adapter and said second adapter to translate said information into a predetermined protocol.

16. The method according to Claim 15, **characterized by** translating said information exclusively in said first adapter and said second adapter.

17. The method according to Claim 13, **characterized by** determining whether an activity in the first network requires communication outside of said network and initiating said sending step when said activity takes place outside of said first network.

18. The method according to Claim 17, **characterized by** contacting the second network and translating the information into a format that is supported by the second adapter.

19. The method according to Claim 13, **characterized by** establishing a profile for a connection for a communication session between the first network and the second network so as to streamline future coordination for future communication sessions.

20. The method according to Claim 19, **characterized in that** said first network establishes a second network in which services for the communication session will be used.

21. The method according to Claim 13, **characterized in that** a protocol coordination mechanism (45) handles and registers rules and conditions for communicating between the first network and the second network.

22. The method according to Claim 21, **characterized by** establishing at said protocol coordination mechanism (45) a service to be used according to a user profile stored in said data base (37) associated with a connection to be made.

23. The method according to Claim 22, **characterized by** identifying specific rules for each of the first network and the second network.

24. The method according to Claim 15, **characterized by** indicating conditions for linking the first network and the second network by considering available factors including at least one of required channel distributions, requisite protocol translation operations, and cost in income distribution between the first network and the second network.

25. The method according to Claim 24, **characterized by** registering agreements and conditions that are mutually agreed upon between the first network and the second network.

26. The method according to Claim 13, **characterized in that** said receiving step includes receiving said coordination information at the central controller (35), said central controller (35) being accessible to each network, also in addition to the first network and the second network.

## Patentansprüche

1. Zentraler Controller zum Einrichten einer Kommunikationssitzung zwischen einem ersten Netz und einem zweiten Netz, die beide dazu ausgebildet sind, ein oder mehrere besondere Protokolle zu verwenden, die in jedem Netz verschieden sein können, wobei der zentrale Controller (35) einen Protokollkoordinierungsmechanismus (45), der Attribute unterschiedlicher Protokolle vergleicht, die durch einen ersten Adapter des ersten Netzes und einen zweiten Adapter des zweiten Netzes unterstützt werden, wenn eine Kommunikationssitzung zwischen dem ersten Netz und dem zweiten Netz eingerichtet wird, und eine Datenbank (37) einschließt, die eine Liste von Teilnehmern mit damit verknüpften Rufnummern in der Datenbank hat, welche Datenbank so konfiguriert ist, dass sie Information beinhaltet, die mit den Rufnummern für unterschiedliche Netze verknüpft sind, zu denen die Teilnehmer gehören, **dadurch gekennzeichnet, dass** der zentrale Controller dazu ausgebildet ist, dass er ein besonderes allgemeines Protokoll beim Einrichten einer Kommunikationssitzung mit den Adaptern verwendet, welche Adapter (21a-g) dazu ausgebildet sind, zwischen den besonderen Protokollen, die in jedem Netz benutzt werden, und dem besonderen allgemeinen Protokoll zum Einrichten einer Kommunikationssitzung mit dem zentralen Controller (35) zu übersetzen, dass der zentrale Controller dazu ausgebildet ist, als Reaktion auf eine Dienstanforderung von einem der Netze zum Einrichten der Kommunikationssitzung mit dem anderen Netz, beruhend auf der Information der Datenbank (37) zu identifizieren, ob ein gemeinsames Protokoll zwischen den beiden Netzen (21, 23, 25, 27, 29, 31, 33) existiert, und dass der zentrale Controller dazu ausgebildet ist, wenn ein gemeinsam zur Verfügung stehendes Protokoll existiert, mit den Netzen (21, 23, 25, 27, 29, 31, 33) gemäß dem allgemeinen Protokoll zu kommunizieren und das gemeinsam zur Verfügung stehende Protokoll den verschiedenen Netzen zuzuweisen, um direkte Kommunikation zwischen ihnen zu erlauben, wobei sonst der zentrale Controller (35) dazu ausgebildet ist, Übersetzung zwischen den zur Verfügung stehenden Protokollen, die durch jedes Netz (21, 23, 25, 27, 29, 31, 33) benutzt werden, zu liefern, um es zu ermöglichen, das Kommunikation zwischen den Netzen durch den Controller stattfindet, welches erstes Netz ein mobiles Telefonnetz, ein auf Kabel beruhendes Kommunikationsnetz, ein Kabelfernsehnetz, ein Ethernet oder ein elektrisches Verteilungsnetz ist.

2. Controller nach Anspruch 1, **dadurch gekennzeichnet, dass** der zentrale Controller (35) einen Router (39) einschließt, der dazu ausgebildet ist, Information von dem ersten Adapter zu empfangen und die Kommunikationssitzung zwischen dem ersten Netz und dem zweiten Netz zu koordinieren.

3. Controller nach Anspruch 1, **dadurch gekennzeichnet, dass** der zentrale Controller (35) dazu ausgebildet ist, Zugriff zu Information in der Datenbank (37) zu nehmen, die Dienste betrifft, die herangezogen werden müssen, wenn die Kommunikationssitzung zwischen dem ersten Netz und dem zweiten Netz eingerichtet wird, und von dem Router (39) Steuersignale zu wenigstens einem von erstem Adapter und zweiten Adapter zu senden, um so ein Protokoll einzurichten, das durch den ersten und den zweiten Adapter verwendet werden soll, wenn während der Kommunikationssitzung kommuniziert wird.

4. Controller nach Anspruch 1, **dadurch gekennzeichnet, dass** der zentrale Controller dazu ausgebildet ist, Eintragungen in der Liste der Teilnehmer in der Datenbank (37) zu ändern, wenn er davon benachrichtigt wird, dass ein Teilnehmer von einer Netzangliederung sich zu einer anderen bewegt, und dass der Netzcontroller (35) dazu ausgebildet ist, neue Information zu verwenden, die mit einer Bewegung des Teilnehmers verknüpft ist, um die Kommunikationssitzung bei dem gegenwärtigen Netz einzurichten, das mit dem Teilnehmer verknüpft ist, so dass eine Änderung bei den Rufnummern durch das erste Netz nicht erforderlich ist, um die Kommunikationssitzung mit dem Teilnehmer einzurichten.

5. Controller nach Anspruch 1, **dadurch gekennzeichnet, dass** die Datenbank (37) Datenbankeintragungen zum Verknüpfen von verschiedenen Rufnummern für einen besonderen Teilnehmer mit einem Netz und einer Netznummer für den Teilnehmer hat.

6. Controller nach Anspruch 5, **dadurch gekennzeichnet, dass** die Datenbank (37) dazu ausgebildet ist, eine Rufnummer, die in einer Rufanforderung für einen besonderen Teilnehmer enthalten ist, mit einer Netznummer und einer anderen Rufnummer, bei der der Teilnehmer erreichbar ist, zu verknüpfen.

7. Kommunikationssystem, das aufweist:
ein erstes Netz und ein zweites Netz, die beide dazu ausgebildet sind, ein oder mehrere besondere Protokolle zu verwenden, die in jedem Netz unterschiedlich sein können, wobei ein Controller (35) dazu ausgebildet ist, eine Kommunikationsverbindung zwischen dem ersten Netz und dem zweiten Netz einzurichten, und der zentrale Controller eine Datenbank (37) einschließt, die eine Liste von Teilnehmern mit damit verknüpften Rufnummern in der Datenbank hat, welche Datenbank dazu ausgebildet ist, Information zu beinhalten, die mit den Rufnummern für unterschiedliche Netze verknüpft sind, zu denen die Teilnehmer gehören, **dadurch gekennzeichnet, dass** ein erster Adapter dazu ausgebildet ist, zwischen einem systemeigenen Protokoll, das in dem ersten Netz verwendet wird und einem besonderen allgemeinen Protokoll zu übersetzen, welcher zentrale Controller (35) dazu ausgebildet ist, mit dem ersten Adapter unter Verwendung des allgemeinen Protokolls zu kommunizieren, und dass ein zweiter Adapter dazu ausgebildet ist, eine Koordinationssitzung zwischen dem zentralen Controller (35) und dem zweiten Netz einzurichten, dass der zentrale Controller dazu ausgebildet ist, als Reaktion auf eine Dienstanforderung von einem der Netze zum Einrichten der Kommunikationssitzung mit dem anderen Netz beruhend auf der Information der Datenbank (37) zu identifizieren, ob ein gemeinsames Protokoll zwischen den beiden Netzen (21, 23, 25, 27, 29, 31, 33) existiert, und dass der zentrale Controller dazu ausgebildet ist, wenn ein gemeinsam zur Verfügung stehendes Protokoll existiert, mit den Netzen (21, 23, 25, 27, 29, 31, 33) gemäß dem allgemeinen Protokoll zu kommunizieren und das gemeinsam zur Verfügung stehende Protokoll den unterschiedlichen Netzen zuzuweisen, um direkte Kommunikation zwischen ihnen zu ermöglichen, wobei sonst der zentrale Controller (35) dazu ausgebildet ist, Übersetzung zwischen den zur Verfügung stehenden Protokollen, die durch jedes Netz (21, 23, 25, 27, 29, 31, 33) benutzt werden, zu schaffen, um zu ermöglichen, dass die Kommunikation zwischen den Netzen durch den zentralen Controller stattfindet, wobei das erste Netz ein Mobiltelefonnetz, ein auf Kabel beruhendes Telekommunikationsnetz, ein Kabelfernsehnetz, ein Ethernet oder ein elektrisches Verteilungsnetz ist.

8. System nach Anspruch 7, **dadurch gekennzeichnet, dass** der zentrale Controller (35) einen Router (39) einschließt, der dazu ausgebildet ist, Information von dem ersten Adapter zu empfangen und die Kommunikation zwischen dem ersten Netz und dem zweiten Netz zu koordinieren.

9. System nach Anspruch 7, **dadurch gekennzeichnet, dass** der zentrale Controller (35) einen Router (39), der konfiguriert ist, eine Schnittstelle zwischen dem ersten Adapter und dem zweiten Adapter zu schaffen, und
eine Datenbank aufweist, die konfiguriert ist, eine Liste von Teilnehmern und von Rufnummern der Teilnehmern zu halten,
wobei der zentrale Controller (35) dazu konfiguriert ist, Zugang zu Information in der Datenbank zu nehmen, die Dienste betrifft, die herangezogen werden müssen, wenn die Kommunikation zwischen dem ersten und dem zweiten Netz eingerichtet wird, und von dem Router Steuersignale zu wenigstens einem von ersten Adapter und zweiten Adapter zu senden, um so ein Protokoll einzurichten, das durch den ersten Adapter und den zweiten Adapter verwendet werden soll, wenn diese kommunizieren.

10. System nach Anspruch 7, **dadurch gekennzeichnet, dass** der zentrale Controller (35) dazu ausgebildet ist, Eintragungen in der Liste von Teilnehmern in der Datenbank als Reaktion auf die Benachrichtigung zu ändern, dass sich ein Teilnehmer von einer Netzanbindung zu einer anderen bewegt; und dass der zentrale Controller (35) dazu ausgebildet ist, neue Information zu verwenden, die mit einer Bewegung des Teilnehmers verknüpft ist, um die Kommunikation bei einem gegenwärtigen Netz, mit dem der Teilnehmer verknüpft ist, einzurichten, so dass eine Änderung bei Rufnummern durch das erste Netz nicht erforderlich ist, um die Kommunikation mit dem Teilnehmer einzurichten.

11. System nach Anspruch 7, **dadurch gekennzeichnet, dass** der zentrale Controller (35) eine Datenbank (37) einschließt, die Datenbankeintragungen hat, die verschiedene Rufnummern für einen besonderen Teilnehmer mit einem Netz und einer Netsnummer für den Teilnehmer verknüpft.

12. System nach Anspruch 7, **dadurch gekennzeichnet, dass** die Datenbank konfiguriert ist, eine Rufnummer, die in einer Rufanforderung für einen besonderen Teilnehmer enthalten ist, mit einer Netznummer und einer anderen Rufnummer zu verknüpfen, bei der der Teilnehmer erreichbar ist.

13. Verfahren zum Kommunizieren zwischen Netzen, die jedes dazu ausgebildet sind, ein oder mehrere besondere Protokolle zu verwenden, die in jedem Netz unterschiedlich sein können, das die Schritte aufweist:
eine Protokollkoordinierungsinformation zu einem zentralen Controller (35) von einem ersten Adapter zu senden, der mit einem ersten Netz verknüpft ist, das Einrichtung einer Kommunikationssitzung zu einem zweiten Netz anfordert;
die bei dem zentralen Controller (35) zu empfangen;
bei dem zentralen Controller (35) Kommunikationsattribute des ersten Adapters und des ersten Netzes und Attribute zu identifizieren, die mit einem zweiten Netz verknüpft sind, mit dem ein zweiter Adapter verknüpft ist, und in einer Datenbank Information zu halten, die mit für unterschiedliche Netze verknüpft ist, wobei die Datenbank eine Liste von Teilnehmern mit damit verknüpften Rufnummern hat, **gekennzeichnet durch** den Schritte: Information beim ersten Adapter und beim zweiten Adapter zwischen den besonderen Protokollen, die in jedem Netz verwendet werden, und einem besonderen allgemeinen Protokoll zu Übersetzen, das beim Einrichten einer Kommunikations" sitzung mit dem zentralen Controller (35) verwendet wird, beim zentralen Controller als Reaktion auf eine Dienstanforderung von einem der Netze zum Einrichten einer Kommunikationssitzung mit dem anderen Netz aufgrund der Information in der Datenbank (37) zu identifizieren, ob ein gemeinsames Protokoll zwischen den beiden Netzen (21, 23, 25, 27, 29, 31, 33) existiert,
wobei der zentrale Controller, wenn ein gemeinsam zur Verfügung stehendes Protokoll existiert, mit den Adaptern in den Netzen (21, 23, 25, 27, 29, 31, 33) gemäß dem allgemeinen Protokoll kommuniziert und das gemeinsam zur Verfügung stehende Protokoll den unterschiedlichen Netzen zuweist, um direkte Kommunikation zwischen ihnen zu ermöglichen, und sonst beim zentralen Controller Übersetzung zwischen den zur Verfügungstehenden Protokollen, die **durch** jedes Netz (21, 23, 25, 27, 29, 31, 33) verwendet werden, zu schaffen, um zu ermöglichen, dass die Kommunikation zwischen den Netzen **durch** den zentralen Controller stattfinden kann.

14. Verfahren nach Anspruch 13, **gekennzeichnet durch** Feststellen beim zentralen Controller (35), ob der erste Adapter oder der zweite Adapter den Schritt des Übersetzen von Information ausschließlich ausführen, und **durch** Bestimmen, ob ein Zwischenübersetzungsschritt erforderlich ist.

15. Verfahren nach Anspruch 13, **dadurch gekennzeichnet, dass** der erste Adapter und der zweite Adapter dazu gebracht werden, die Information in ein vorbestimmtes Protokoll zu übersetzen.

16. Verfahren nach Anspruch 15, **gekennzeichnet durch** Übersetzen der Information ausschließlich in dem ersten Adapter und dem zweiten Adapter.

17. Verfahren nach Anspruch 13, **gekennzeichnet durch** Bestimmen, ob eine Aktivität im ersten Netz Kommunikation außerhalb des Netzes erfordert, und **durch** Initiieren des Sendeschritts, wenn die Aktivität außerhalb des ersten Netzes stattfindet.

18. Verfahren nach Anspruch 17, **gekennzeichnet durch** Kontaktieren des zweiten Netzes und Übersetzen der Information in ein Format, das **durch** den zweiten Adapter unterstützt wird.

19. Verfahren nach Anspruch 13, **gekennzeichnet durch** Einrichten eines Profils für eine Verbindung für eine Kommunikationssitzung zwischen dem ersten Netz und dem zweiten Netz, um so zukünftige Koordination für zukünftige Kommunikationssitzungen zu rationalisieren.

20. Verfahren nach Anspruch 19, **dadurch gekennzeichnet, dass** das erste Netz ein zweites Netz einrichtet, in welchem Dienste für die Kommunikationssitzung benutzt werden werden.

21. Verfahren nach Anspruch 13, **dadurch gekennzeichnet, dass** ein Protokollkoordinierungsmechanismus (45) Regeln und Bedingungen für das Kommunizieren zwischen dem ersten Netz und dem zweiten Netz handhabt und registriert.

22. Verfahren nach Anspruch 21, **gekennzeichnet durch** Einrichten eines Dienstes bei dem Protokollkoordinationsmechanismus (45), der gemäß einem Benutzerprofil benutzt werden soll, das in der Datenbank (37) gespeichert ist, die mit einer herzustellenden Verbindung verknüpft ist.

23. Verfahren nach Anspruch 22, **gekennzeichnet durch** Identifizieren besonderer Regeln für jedes von erstem Netz und zweitem Netz.

24. Verfahren nach Anspruch 15, **gekennzeichnet durch** Anzeigen von Bedingungen zum Verbinden des ersten Netzes und des zweiten Netzes, indem zur Verfügung stehende Faktoren in Erwägung gezogen werden, die wenigstens einen von erforderlichen Kanalverteilungen, notwendigen Protokollübersetzungsvorgängen und Kosten bei der Einkommensverteilung zwischen dem ersten Netz und dem zweiten Netz einschließen.

25. Verfahren nach Anspruch. 24, **gekennzeichnet durch** Revon Vereinbarungen und Bedingungen, auf die man sich gegenseitig geeinigt hat, zwischen dem ersten Netz und dem zweiten Netz.

26. Verfahren nach Anspruch 13, **dadurch gekennzeichnet, dass** der Empfangsschritt es einschließt, die Koordinierungsinformation beim zentralen Controller (35) zu empfangen, wobei der zentrale Controller (35) für jedes Netz zugänglich ist, auch bei Hinzufügung zum ersten Netz und zum zweiten Netz.

## Revendications

1. Contrôleur central pour établir une session de communication entre un premier réseau et un second réseau, chacun étant disposé pour utiliser un ou plusieurs protocoles spécifiques qui peuvent être différents dans chaque réseau, dans lequel ledit contrôleur central (35) inclut un mécanisme de coordination de protocoles (45) comparant des attributs de protocoles différents supportés par un premier adaptateur dudit premier réseau et un second adaptateur dudit second réseau lors de l'établissement de la session de communication entre le premier réseau et le second réseau, et une base de données (37) ayant une liste d'abonnés avec des numéros appelants associés dans ladite base de données, ladite base de données étant configurée pour héberger des informations associées aux numéros appelants pour les différents réseaux auxquels les abonnés appartiennent,
**caractérisé en ce que** le contrôleur central est disposé pour utiliser un protocole général particulier en établissant une session de communication avec les adaptateurs, lesdits adaptateurs (21a-g) étant disposés pour traduire entre les protocoles spécifiques utilisés dans chaque réseau et ledit protocole général particulier pour établir une session de communication avec le contrôleur central (35), **en ce que** le contrôleur central est disposé, en réponse à une demande de service en provenance d'un des réseaux pour établir la session de communication avec l'autre réseau, pour Identifier si un protocole commun existe entre les deux réseaux (21, 23, 25, 27, 29, 31, 33), sur la base des informations dans ladite base de données (37), et **en ce que** le contrôleur central est disposé, lorsqu'un protocole disponible en commun existe, pour communiquer avec lesdits réseaux (21, 23, 25, 27, 29, 31, 33) selon ledit protocole général et pour attribuer ce protocole disponible en commun aux différents réseaux pour permettre une communication directe entre eux, autrement, le contrôleur central (35) étant disposé pour fournir la traduction entre les protocoles disponibles utilisés par chaque réseau (21, 23, 25, 27, 29, 31, 33) pour permettre que la communication entre les réseaux s'effectue par l'intermédiaire du contrôleur,
ledit premier réseau étant un parmi un réseau de téléphonie mobile, un réseau, de télécommunication filaire, un réseau de télévision par câble, un Ethernet, et un réseau de distribution électrique.

2. Contrôleur selon la revendication 1, **caractérisé en ce que** ledit contrôleur central (35) inclut un routeur (39) qui est configuré pour recevoir des informations en provenance dudit premier adaptateur et pour coordonner ladite session de communication entre ledit premier réseau et ledit second réseau.

3. Contrôleur selon la revendication 1, **caractérisé en ce que** ledit contrôleur central (35) est configuré pour accéder à des informations dans ladite base de données (37) concernant des services à invoquer lors de l'établissement de ladite session de communication entre ledit premier réseau et ledit second réseau et pour envoyer depuis ledit routeur (39) des signaux de commande à au moins un du premier adaptateur et du second adaptateur afin d'établir un protocole devant être employé par le premier adaptateur et le second adaptateur, lors de la communication durant ladite session de communication,

4. Contrôleur selon la revendication 1, **caractérisé en ce que** ledit contrôleur central est disposé pour changer des entrées dans ladite liste d'abonnés dans ladite base de données (37) lors de la notification du passage d'un abonné d'une affiliation de réseau à une autre, et **en ce que** ledit contrôleur de réseau (35) est disposé pour employer de nouvelles informations associées à un mouvement de l'abonné pour établir ladite session de communication au niveau d'un réseau présent associé audit abonné de sorte qu'un changement de numéros appelants par ledit premier réseau ne soit pas requis afin d'établir la session de communication avec l'abonné.

5. Contrôleur selon la revendication 1, **caractérisé en ce que** ladite base de données (37) a des entrées de base de données pour associer divers numéros appelants pour un abonné particulier à un réseau et un numéro de réseau pour ledit abonné.

6. Contrôleur selon la revendication 5, **caractérisé en ce que** ladite base de données (37) est configurée pour associer un numéro appelant inclus dans une demande d'appel pour un abonné spécifique à un numéro de réseau et un autre numéro appelant auquel ledit abonné est disponible.

7. Système de communication, comprenant :
un premier réseau et un second réseau, chacun étant disposé pour utiliser un ou plusieurs protocoles spécifiques qui peuvent être différents dans chaque réseau, un contrôleur central (35) étant configuré pour établir une liaison de communication entre ledit premier réseau et ledit second réseau, et ledit contrôleur central incluant une base de données (37) ayant une liste d'abonnés avec des numéros appelants associés dans ladite base de données, ladite base de données étant configurée pour héberger des informations associées aux numéros appelants pour les différents réseaux auxquels les abonnés appartiennent, **caractérisé en ce qu'**un premier adaptateur est configuré pour traduire entre un protocole natif utilisé dans ledit premier réseau et un protocole général particulier, ledit contrôleur central (35) étant configuré pour communiquer avec ledit premier adaptateur en utilisant ledit protocole général, et **en ce qu'**un second adaptateur est configuré pour établir une session de coordination entre ledit contrôleur central (35) et ledit second réseau, **en ce que** le contrôleur central est disposée, en réponse à une demande de service en provenance d'un des réseaux pour établir la session de communication avec l'autre réseau, pour identifier si un protocole commun existe entre les deux réseaux (21, 23, 25, 27, 29, 31, 33), sur la base des informations dans ladite base de données (37), et **en ce que** le contrôleur central est disposé, lorsqu'un protocole disponible en commun existe, pour communiquer avec lesdits réseaux (21, 23, 25, 27, 29, 31, 33) selon ledit protocole général et pour attribuer ce protocole disponible en commun aux différents réseaux pour permettre une communication directe entre eux, autrement, le contrôleur central (35) étant disposé pour fournir la traduction entre les protocoles disponibles utilisés par chaque réseau (21, 23, 25, 27, 29, 31, 33) pour permettre que la communication entre les réseaux s'effectue par l'intermédiaire du contrôleur central, ledit premier réseau étant un parmi un réseau de téléphonie mobile, un réseau de télécommunication filaire, un réseau de télévision par câble, un Ethernet, et un réseau de distribution électrique.

8. Système selon la revendication 7, **caractérisé en ce que** ledit contrôleur central (35) inclut un routeur (39) qui est configuré pour recevoir des informations en provenance dudit premier adaptateur et pour coordonner ladite communication entre ledit premier réseau et ledit second réseau.

9. Système selon la revendication 7, **caractérisé en ce que**
ledit contrôleur central (35) comprend un routeur (39) qui est configuré pour fournir une interface entre le premier adaptateur et le second adaptateur ; et
une base de données configurée pour contenir une liste d'abonnés et de numéros appelants des abonnés,
ledit contrôleur central (35) étant configuré pour accéder à des informations dans ladite base de données concernant des services à invoquer lors de l'établissement de ladite communication entre ledit premier réseau, et ledit second réseau, et pour envoyer depuis ledit routeur des signaux de commande à au moins un du premier adaptateur et du second adaptateur afin d'établir un protocole devant être employé par le premier adaptateur et le second adaptateur lors de la communication.

10. Système selon la revendication 7, **caractérisé en ce que** ledit contrôleur central (35) est disposé pour changer des entrées dans ladite liste d'abonnés dans ladite base de données en réponse à la notification du passage d'un abonné d'une affiliation de réseau à une autre ; et **en ce que** ledit contrôleur central (35) est disposé pour employer de nouvelles informations associées à un mouvement de l'abonné pour établir ladite communication au niveau d'un réseau présent associé audit abonné de sorte qu'un changement de numéros appelants par ledit premier réseau ne soit pas requis afin d'établir la communication avec l'abonné.

11. Système selon la revendication 7, **caractérisé en ce que** ledit contrôleur central (35) inclut une base de données (37) ayant des entrées de base de données qui associent divers numéros appelants pour un abonné particulier à un réseau et un numéro de réseau pour ledit abonné.

12. Système selon la revendication 7, **caractérisé en ce que** ladite base de données est configurée pour associer un numéro appelant inclus dans une demande d'appel pour un abonné spécifique à un numéro de réseau et un autre numéro appelant auquel ledit abonné est disponible.

13. Procédé pour communiquer entre des réseaux, chacun étant disposé pour utiliser un ou plusieurs protocoles spécifiques qui peuvent être différents dans chaque réseau, comprenant les étapes consistant à :
envoyer des informations de coordination de protocoles à un contrôleur central (35) depuis un premier adaptateur associé à un premier réseau demandant l'établissement d'une session de communication à un second réseau ;
recevoir lesdites informations de coordination au niveau dudit contrôleur central (35),
identifier au niveau dudit contrôleur central (35) des attributs de communication dudit premier adaptateur et dudit premier réseau et des attributs associés à un second réseau ayant un second adaptateur qui y est associé, et héberger dans une base de données des informations associées à des numéros appelants pour différents réseaux, la base de données ayant une liste d'abonnés avec des numéros appelants associés, **caractérisé par** les étapes consistant à : traduire des informations au niveau du premier adaptateur et du second adaptateur entre les protocoles spécifiques utilisés dans chaque réseau et un protocole général particulier utilisé en établissant une session de communication avec le contrôleur central (35), identifier au niveau du contrôleur central, en réponse à une demande de service en provenance d'un des réseaux pour établir une session de communication avec un autre réseau, si un protocole commun existe entre les deux réseaux (21, 23, 25, 27, 29, 31, 33) sur la base des informations dans ladite base de données (37), le contrôleur central communiquant, lorsqu'un protocole disponible en commun existe, avec les adaptateurs dans lesdits réseaux (21, 23, 25, 27, 29, 31, 33) selon ledit protocole général et attribuer ce protocole disponible en commun aux différents réseaux pour permettre une communication directe entre eux, autrement, fournir au niveau du contrôleur central la traduction entre les protocoles disponibles utilisés par chaque réseau (21, 23, 25, 27, 29, 31, 33) pour permettre que la communication entre les réseaux s'effectue par l'intermédiaire du contrôleur central.

14. Procédé selon la revendication 13, **caractérisé par** l'établissement au niveau dudit contrôleur central (35) de si ledit premier adaptateur et ledit second adaptateur exécutent ladite étape de traduction d'informations exclusivement, et la détermination de si une étape de traduction intermédiaire est requise.

15. Procédé selon la revendication 13, **caractérisé par** le fait de charger ledit premier adaptateur et ledit second adaptateur de traduire lesdites informations en un protocole prédéterminé.

16. Procédé selon la revendication 15, **caractérisé par** le fait de traduire lesdites informations exclusivement dans ledit premier adaptateur et ledit second adaptateur.

17. Procédé selon la revendication 13, **caractérisé par** la détermination de si une activité dans le premier réseau requiert une communication à l'extérieur dudit réseau et l'initiation de ladite étape d'envoi lorsque ladite activité s'effectue à l'extérieur dudit premier réseau.

18. Procédé selon la revendication 17, **caractérisé par** le fait de contacter le second réseau et traduire les informations en un format qui est supporté par le second adaptateur.

19. Procédé selon la revendication 13, **caractérisé par** l'établissement d'un profil pour une connexion pour une session de communication entre le premier réseau et le second réseau afin de rationaliser une future coordination pour de futures sessions de communication.

20. Procédé selon la revendication 19, **caractérisé en ce que** ledit premier réseau établit un second réseau dans lequel des services pour la session de communication seront utilisés,

21. Procédé selon la revendication 13, **caractérisé en ce qu'**un mécanisme de coordination de protocoles (45) traite et enregistre des règles et des conditions pour communiquer entre le premier réseau et le second réseau.

22. Procédé selon la revendication 21, **caractérisé par** l'établissement au niveau dudit mécanisme de coordination de protocoles (45) d'un service à utiliser selon un profil d'utilisateur stocké dans ladite base de données (37) associé à une connexion devant être effectuée.

23. Procédé selon la revendication 22, **caractérisé par** l'identification de règles spécifiques pour chacun du premier réseau et du second réseau.

24. Procédé selon la revendication 15, **caractérisé par** l'indication de conditions pour relier le premier réseau et le second réseau en considérant des facteurs disponibles incluant au moins un parmi des répartitions de canaux requises, des opérations de traduction de protocole requises, et le coût de la répartition du revenu entre le premier réseau et le second réseau.

25. Procédé selon la revendication 24, **caractérisé par** l'enregistrement d'accords et de conditions qui sont mutuellement convenus entre le premier réseau et le second réseau.

26. Procédé selon la revendication 13, **caractérisé en ce que** ladite étape de réception inclut la réception desdites informations de coordination au niveau du contrôleur central (35), ledit contrôleur central (35) étant accessible à chaque réseau, également en plus du premier réseau et du second réseau.
